# EUROPÄISCHE PATENTSCHRIFT

(11) **EP 0 509 499 B1**
(45) Veröffentlichungstag und Bekanntmachung des Hinweises auf die Patenterteilung: **27.12.1995**
(21) Anmeldenummer: 92106577.7
(22) Anmeldetag: 16.04.1992
(51) Int. Cl.: B65G 1/04

(54) **Lastaufnahmemittel für Lagerbehälter**
Load pick-up means for storage container
Moyen de prise de charge pour récipient de stockage

(30) Priorität: 19.04.1991 DE 4112830
(43) Veröffentlichungstag der Anmeldung: 21.10.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Grafe, Wolfram, Dipl.-Ing., W-4700 Bergkamen (DE); Jodin, Dirk, Dipl.-Ing., W-4600 Dortmund (DE); Becker, Ralf, Dipl.-Ing., W-4600 Dortmund 1 (DE); Schroer, Winfried, Dipl.-Ing. (FH), W-4620 Castrop-Rauxel (DE)

(56) Entgegenhaltungen:
- CH-A- 530 324
- DE-A- 3 633 508

## Beschreibung

Die Erfindung betrifft ein Lastaufnahmemittel zur Ein- bzw. Auslagerung von Lagerbehältern, die Griffleisten aufweisen gemäß dem Oberbegriff des Hauptanspruchs.

Aus der DE-A-36 33 508 ist ein gattungsgemäßes Lastaufnahmemittel bekannt. Dieses Lastaufnahmemittel weist Greifmittel auf, die als um vertikale Gelenke schwenkbare und mit den Griffleisten in formschlüssige Verbindung bringbare und gegenüber dem Hubtisch mittels einem Verschiebeglied translatorisch ausgebildet sind.

Des weiteren ist aus der CH-A-669 580 ein Lastaufnahmemittel bekannt, bei dem vertikal verlaufende Kanäle vorgesehen, in denen Greifmittel teleskopisch verfahren. Die Greifmittel greifen in spezielle Greifhaken in den Bereichen der aufzunehmenden Lagerbehälter. Die für das Verfahren der Greifmittel nötigen Kanäle innerhalb des Lastaufnahmemittels bedingen einerseits ein relativ großes Bauvolumen und andererseits bedingt der zwischen Behälterauflage und Säule des Lastaufnahmemittels nötige Kragarm eine relativ aufwendige und schwere Bauweise, da zusätzliche Biegemomente abgefangen werden müssen. Die Greifmittel müssen immer paarweise angeordnet werden, was zu einem relativ hohen Anlagenaufwand führt. Die Steue*e*rung der Bewegung der Greifmittel ist relativ aufwendig, da diese synchron arbeiten. Die Umschlagleistung des genannten Lastaufnahmemittels kann auch dadurch gemindert werden, daß das Verfahrgerät erst dann zur nächsten Regalposition starten kann, wenn die Greifmittel hochgeklappt und in die Mittelstellung zurückgefahren sind, und daß der Ausschiebevorgang des Behälters aus dem Lastaufnahmemittel in ein stationäres Regal hinein erst beginnen kann nachdem die Greifvorrichtung entgegen der beabsichtigten Ausschubrichtigung zum Behälterende hin verfahren und in die dortigen Greifhaken eingeklappt sind. Dies ist nachteilig.

Aufgabe der Erfindung ist es, eine alternative Ausbildung eines gattungsgemäßen Lastaufnahmemittels mit einer einfachen und zuverlässigen Konstruktion und Wirkungsweise anzugeben.

Diese Aufgabe ist durch die im Hauptanspruch angegebenen Merkmale gelöst.. Die Unteransprüche stellen vorteilhafte Weiterbildungen dar.

Durch die Ausgestaltung derart, daß drehbar gelagerte Zughaken vorgesehen sind, welche die Lagerbehälter teilweise in die Kontur des Hubwagens einziehen bzw. aus dieser herausschieben und durch die Ausgestaltung derart, daß die Bewegung der Lagerbehälter innerhalb der Kontur des Hubwagens durch weitere Transportmittel erfolgt, ist erreicht, daß bei einer kompakten Bauweise ein sicherer Transport des Lagerbehälters innerhalb der Kontur des Hubwagens erfolgt. Des weiteren ist bei dieser Konstruktion realisiert, daß außerhalb der Kontur des Hubwagens keine Bauteile vorstehen. Weitere Vorteile des erfindungsgemäßen Lastaufnahmemittels bestehen darin, daß zwischen den aufzunehmenden Lagerbehältern, welche entweder im Regal angeordnet sind oder frei auf dem Boden stehen, weder in horizontaler noch in vertikaler Richtung Raum für die Bewegung des Hubwagens benötigt wird. Nur im Frontbereich des Lagerbehälters ist Raum für die Griffleiste notwendig. Die Griffleiste des Lagerbehälters ist so ausgestaltet, daß sie auch zur manuellen Handhabung des Behälters geeignet ist. Durch die im Hauptanspruch angegebene Ausgestaltung des Lastaufnahmemittels ist weiterhin erreicht, daß auch Greifmittel nicht so weit vorgeschoben bzw. nicht so weit in die Kontur des Hubwagens eingezogen werden müssen, bis der gesamte Transportbehälter durch die Kontur desselben umfaßt wird. Dies führt zur Raumersparnis. Dadurch, daß zwei voneinander unabhängige Mechanismen vorgesehen sind, welche den Transport der Transportbehälter übernehmen, wird die Zuverlässigkeit des Gerätes erhöht. Die Transportmittel innerhalb der Kontur des Hubwagens sind durch mindestens einen Reibriementrieb gebildet. Dieser liegt seitlich an dem zu transportierenden Behälter an. Durch diese Ausgestaltung wird erreicht, daß die Steuerung eines Reibriementriebes relativ einfach ist und das Positionieren des Transportbehälters innerhalb des Lastaufnahmemittels präzise erfolgt. Dies ist für die Abgabe des Behälters von Bedeutung. Weiterhin sind an der inneren Kontur des Lastaufnahmemittels auf der dem Reibriementrieb abgewandten Seite Abstützmittel wie z.B. Gleitkunststoffleisten, Röllchenleisten und dergleichen vorgesehen, um den Andruck des Reibriementriebs auf den Transportbehälter aufzunehmen. Erfindungsgemäß ist nur ein Linearantrieb für die Ausschub- bzw. Einziehbewegung beider Haken vorgesehen. Dabei wird der Linearantrieb durch eine mit den Zughaken zusammenwirkende Sperrklinke gesteuert. Die benötigte Ausschubrichtung des Hebels wird durch die Sperrklinke geschaltet, ie nachdem ob diese im Eingriff mit dem rechten oder linken Zughaken steht.

Es ist ein Hubwerk zum Anfahren von mehreren Ebenen und Anheben des Lastaufnahmemittels zum Eingriff der Zughaken in die Griffleisten vorgesehen. Die vorteilhafte Ausgestaltung betrifft die Doppelfunktion des Hubwerks, erstens das Anfahren von mehreren Ebenen und zweitens die Hubbewegung des Hubwagens zwecks Eingreifen des Zughakens in die Griffleiste des Transportbehälters.

Durch die Ausgestaltung derart, daß der Reibriemenantrieb seitlich des aufzunehmenden/abzugebenden Lagerbehälters angeordnet ist, ist eine Bodenaufnahme möglich.

In den Zeichnungen ist ein Ausführungsbeispiel der Erfindung dargestellt. Es zeigen:

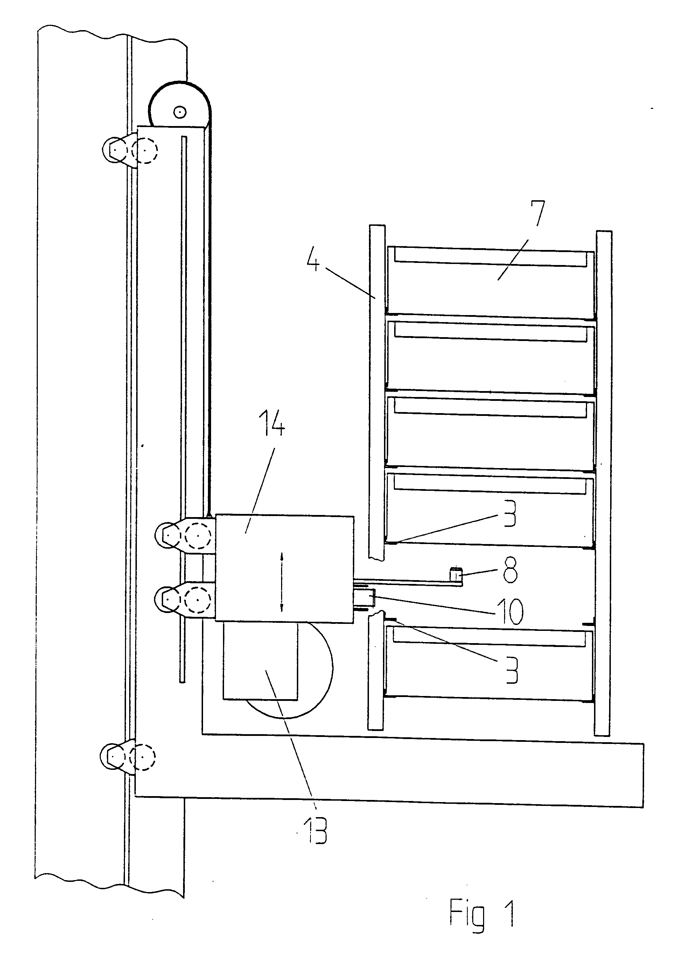

Fig. 1 eine Vorderansicht des erfindungsgemäßen Lastaufnahmemittels;

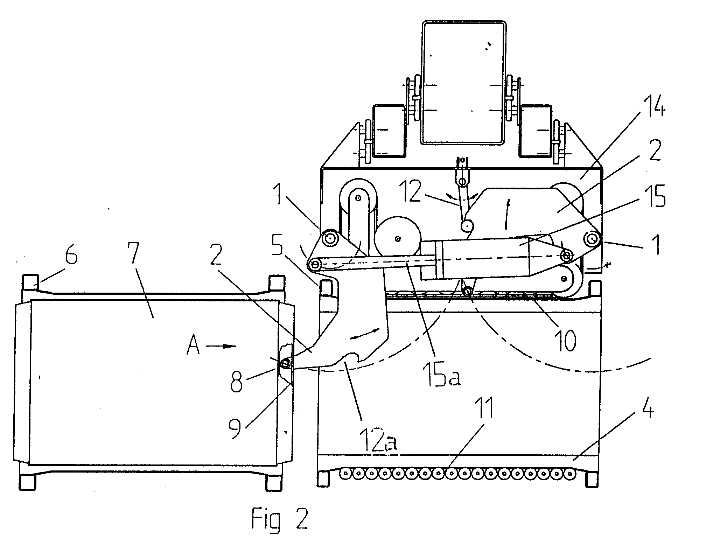

Fig. 2 eine Draufsicht auf das Lastaufnahmemittel der Fig. 1;

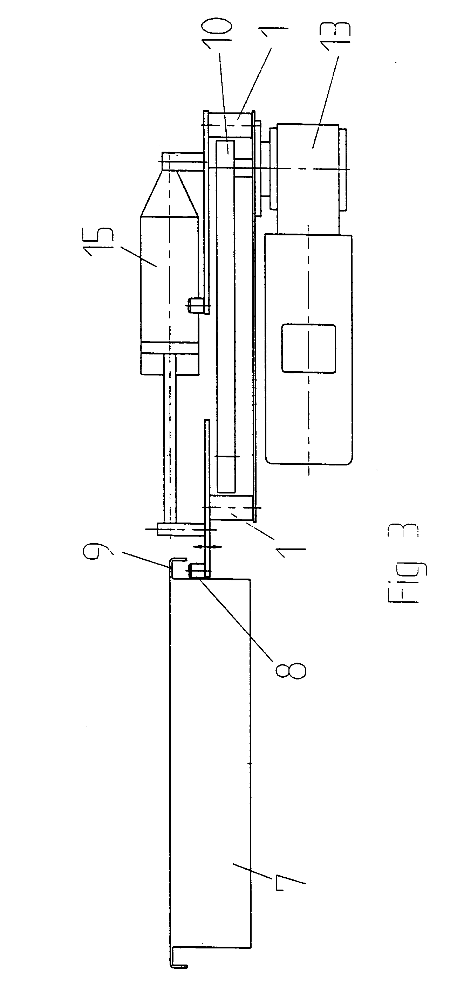

Fig. 3 eine Seitenansicht des Lastaufnahmemittels;

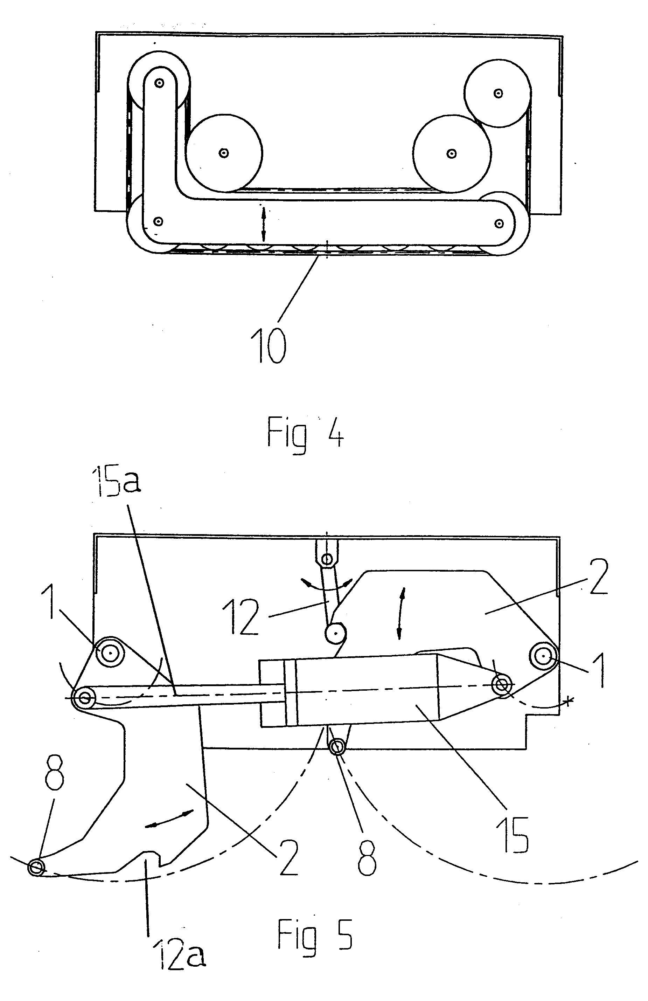

Fig. 4 den Riementrieb des Lastaufnahmemittels;
Fig. 5 den Hebelmechanismus des Lastaufnahmemittels;
Fig. 6 eine andere Ausführungsform des Riementriebs;
Fig. 7 eine Vorderansicht des Lastaufnahmemittels mit dem in Fig. 6 dargestellten Riementrieb.

Das Lastaufnahmemittel weist in einem Drehgelenk 1 aufgehängte Zughaken 2, welche zwischen zwei übereinanderliegenden Auflageleisten 3 eines transportablen Regalgestells 4 angeordnet sind, auf. Die Zughaken 2 sind um eine Säule 5 des transportablen Regalgestells 4 in Richtung auf einen, in einem Regal 6 befindlichen Lagerbehälter 7 schwenkbar. Die Zughaken 2 weisen an ihren Aufnahmeenden drehbare Hakenrollen 8 auf, welche mit der Griffleiste 9 des Lagerbehälters 7 zusammenwirken. In der Kontur des Lastaufnahmemittels ist ein Reibriementrieb 10 angeordnet, und an der diesem gegenüberliegenden Wand des Hubwagens befindet sich eine Röllchenleiste 11. Sie stellt das Gegenlager zum Abfangen der Andruckkraft des Reibriemens 10. Bei höheren Behältergewichten kann es zweckmäßig sein, einen zweiten Reibriementrieb anzuordnen.

Mit den Zughaken 2 wirkt eine Sperrklinke 12 zusammen, welche in eine Ausnehmung 12 a des Hakens eingreift. Der Reibriementrieb 10 wird durch einen Reibriemenantrieb 13, welcher sich unterhalb eines Rahmens 14 befindet, angetrieben. Für die Bewegung der Zughaken 2 ist ein Linearantrieb 15 mit Aufhängungen 15a vorgesehen. Diese wirken unmittelbar mit den Zughaken 2 zusammen. Die Kraftwirkung des Linearantriebs 15 wird durch die Sperrklinke 12 wechselweise auf einer, der beiden Zughaken 2 gelenkt. Der Linearantrieb 15 kann je nach Bedarf ein Pneumatik, Hydraulik- oder ein elektrischer Spindeltriebzylinder sein, der nur seine beiden End- und keine Zwischenstellungen anzufahren braucht. Durch geeignete Wahl der Hebelverhältnisse im Anschlagbereich des Linearantriebs 15 wird erreicht, daß die Kraftwirkung der Hakenrolle 8 auf den Lagerbehälter 7 beim Ziehen in die Kontur des Hubwagens hinein kontinuierlich abnimmt und vom Reibriementrieb 10 übernommen wird bzw. beim Heranschieben zunimmt.

Es ergibt sich folgende Wirkungsweise:
Der Zughaken 2 wird um die Säule 5 des transportablen Regalgestells 4 in Richtung des Regals 6 geschwenkt. Die Schwenkbewegung erfolgt soweit, bis das Aufnahmeende des Zughakens 2 und die sich dort befindliche Hakenrolle 8 in den Bereich der Griffleiste des Lagerbehälters 7 kommt. Daraufhin führt der Hubwagen über ein Hubwerk eine kurze Hubbewegung aus, so daß die drehbare Hakenrolle 8 mit der Griffleiste 9 des Behälters 7 zum Eingriff kommt. Anschließend wird der Transportbehälter 7 durch das Zurückschwenken des Zughakens 2 um das Drehgelenk 1 in die Kontur des Regalgestells 4 gezogen. Gleichzeitig mit dem Ausschwenken des Zughakens 2 verschiebt sich der Reibriementrieb 10 in Einzugsrichtung des Lagerbehälters 7 und übernimmt den Lagerbehälter 7 nach dem vollständigen Einschwenken des Hakens 2 und transportiert ihn bis in die Mittelstellung im Regalgestell 4. Während des Weiterzugs des Lagerbehälters wandert die drehbare Hakenrolle 8 seitlich aus der Griffleiste 9 des Behälters 7 heraus. Nachdem der Behälter 7 in Mittelstellung positioniert ist, ist das Lastaufnahmemittel nach einer kurzen Rückbewegung des Reibriemens 10 bereit, eine neue Ebene anzufahren. Das Herausschieben eines Lagerbehälters 7 aus dem Regalgestell in das Regal 6 erfolgt analog in umgekehrter Reihenfolge mit dem Unterschied, daß die Hakenrolle 8 beim Zurückschwenken des Zughakens 2 in der unteren Position verbleibt und der Hubwagen keinen Greifhub ausführt.

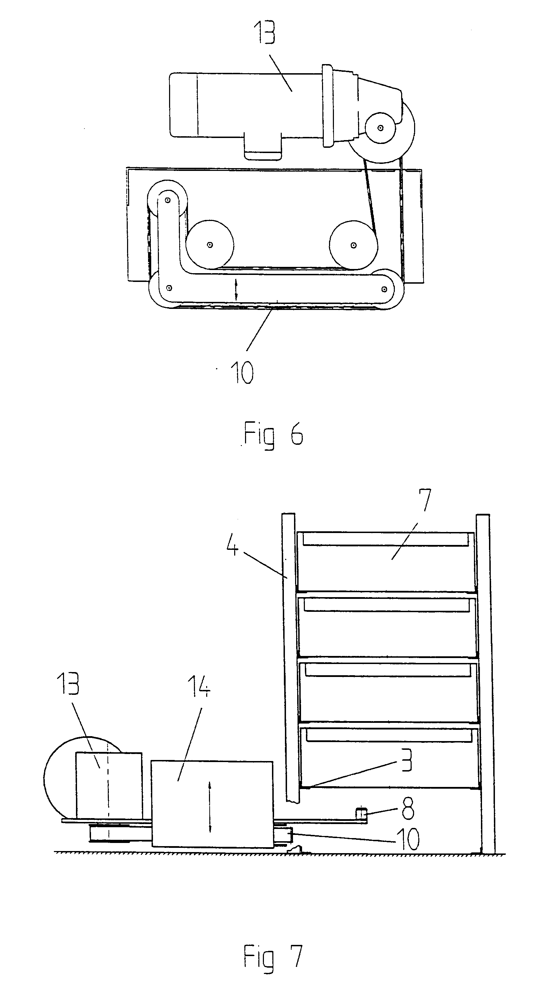

Durch die in den Figuren 6 und 7 dargestellte Ausführungsform des erfindungsgemäßen Lastaufnahmemittels derart, daß der Reibriementriebantrieb 13 umgekehrt aufgehängt und hinter dem Hebelantrieb verlegt wird, ist erreicht, daß keine über die Behälterunterkante hinausragenden Teile vorhanden sind und daß mit einem solchen Lastaufnahmemittel eine Aufnahme der auf dem Boden stehenden Behälter direkt möglich ist. Sollte das oben beschriebene Lastaufnahmemittel in einem konventionellen Hochregal zur Anwendung kommen, bei dem die Behälter direkt aus dem Regalfach zur Übergabestation und umgekehrt transportiert werden, wo also der oben beschriebene Hubantrieb nicht vorhanden ist, kann dann auf einen zusätzlichen Antrieb für die Greifbewegung verzichtet werden, wobei die Bewegung von Riementrieb und Hakenrolle steuerungstechnisch so synchronisiert werden, daß die Hakenrolle beim Herausschieben des Lagerbehälters zwischen die Griffleiste fährt. Das Lösen der Hakenrolle aus dem gerade eingeschobenen Lagerbehälter und das Einhaken in die Griffleiste eines abzuholenden Lagerbehälters erfolgt dann durch das ohnehin für das Anfahren der verschiedenen Regalebenen benötigte Hubwerk des Regalbediengeräts.

## Patentansprüche

1. Lastaufnahmemittel an einem in einer Regalgasse verfahrbaren Regalbediengerät, einer Hängebahn oder einem Flurförderzeug mit einem höhenverfahrbaren Hubwagen zur Ein- bzw. Auslagerung von Lagerbehältern (7), die an den der Regalgasse zugewandten Seiten Griffleisten (9) aufweisen, in bzw. aus seitlich der Regalgasse angeordnete Regalfächer bzw. angeordneten Regalfächern, wobei Greifmittel in Ein- bzw. Auslagerungsrichtung über die Vertikalprojektion des Hubwagens ausfahrbar und in sie einfahrbar sind und als um vertikale Gelenke (1) schwenkbare und mit den Griffleisten (9) in formschlüssigen Eingriff bringbare Zughaken (2) ausgebildet sind, **dadurch gekennzeichnet**, daß die vertikalen Drehgelenke (1) der Zughaken (2) an den den Regalfächern zugewandten Seiten hubwagenfest angeordnet sind, wobei die Schwenkbewegung für zwei in Ein- bzw. Auslagerungsrichtung gegenüberliegende Zughaken (2) durch einen einzigen, unmittelbar zwischen ihnen wirkenden, neben den jeweiligen Drehgelenken (1) angreifenden Linearantrieb (15) erfolgt und jeweils einer der beiden gegenüberliegenden Zughaken (2) mittels einer schaltbaren Sperrklinke (12) wahlweise in eingefahrener Stellung blockierbar ist und jeder Zughaken (2) an seinem Aufnahmeende mit einer um eine vertikale Achse drehbaren Rolle ausgestattet ist und daß auf dem Hubwagen ein in Ein- bzw. Auslagerungsrichtung verlaufender, in zwei Richtungen antreibbarer Reibriementrieb (10) mit vertikalen Rollen angeordnet ist, der seitlich an den Lagerbehälter (7) zum Reibschluß andrückbar ist und auf der gegenüberliegenden Seite parallel verlaufend ein reibungsminderndes Abstützmittel (11) zur Aufnahme der Querdruckkräfte des Reibriementriebes (10) vorgesehen ist.

2. Lastaufnahmemittel nach Anspruch 1, **dadurch gekennzeichnet**, daß die Griffleiste (9) an der Stirnseite des Lagerbehälters (7) verläuft und die Form eines nach unten offenen U's aufweist.

3. Lastaufnahmemittel nach Anspruch 1 oder 2 **dadurch gekennzeichnet**, daß der Hubwagen ein Hubwerk aufweist zum Anfahren der Ebenen des mitgeführten transportablen Regalgestells (4) und zum Einhaken von Hakenrollen (8) in die Griffleiste des Lagerbehälters (7).

4. Lastaufnahmemittel nach Anspruch 1, **dadurch gekennzeichnet**, daß mit dem Hubwagen ein transportables Regalgestell (4) mitführbar ist.

5. Lastaufnahmemittel nach Anspruch 1, **dadurch gekennzeichnet**, daß das Abstützmittel (11) eine Röllchenleiste, Gleitkunststoffleiste oder ein Reibriemen ist.

6. Lastaufnahmemittel nach einem der vorangegangenen Ansprüche, **dadurch gekennzeichnet**, daß alle Antriebselemente am Hubwagen seitlich des aufzunehmenden Lagerbehälters angeordnet sind.

## Claims

1. A load pick-up means on a shelf-operating device movable along a shelf lane, or on an overhead conveyor or an industrial truck, comprising a vertically movable lift truck whereby storage containers (7) having handle strips (9) on the sides facing the shelf lane are placed in or removed from one or more shelf compartments disposed at the side of the shelf lane, gripping means being extendable and retractable in the placing-in or removal direction over the vertical projection of the lift truck and being in the form of tension hooks (2) pivotable around vertical pivots (1) and adapted to be brought into positive engagement with the handle strips (9), characterised in that the vertical pivots (1) of the tension hooks (2) are secured to the lift truck at the sides facing the shelf compartments, the pivoting motion for each pair of opposite tension hooks (2) in the placing-in or removal direction being brought about by a single linear drive (15) acting directly between them and engaging near the respective pivot (1), and a respective one of the pair of opposite tension hooks (2) is optionally lockable in the retracted position by a shiftable catch (12) and the receiving end of each tension hook is equipped with a roller rotatable around a vertical axis, and a friction belt drive (10) with vertical rollers drivable in two directions and extending in the placing-in or the removal direction is disposed on the lift truck and is pressable laterally against the storage container (7) for frictional engagement and is provided on the opposite side with a parallel-extending friction-reducing bracing means (11) for receiving the transverse pressure forces of the friction-belt drive (10).

2. A load pick-up means according to claim 1, characterised in that the handle strip (9) extends along the end face of the storage container (7) and has the shape of a downwardly open U.

3. A load pick-up means according to claim 1 or 2, characterised in that the lift truck has a lifting mechanism for moving along the flat surfaces of the entrained and supportable shelf frame (4) and for hooking the rollers (8) into the handle strip of the bearing containers (7).

4. A load pick-up means according to claim 1, characterised in that the lift truck is adapted to entrain a transportable shelf frame (4).

5. A load pick-up means according to claim 1, characterised in that the bracing means (11) is a roller strip, a sliding plastics strip or a friction belt.

6. A load pick-up means according to any of the preceding claims, characterised in that all drive elements are disposed on the lift truck at the side of the storage container to be picked up.

## Revendications

1. Moyen de prise de charge monté sur un appareil de desserte de rayonnage circulant dans une allée du rayonnage, un transporteur aérien ou sur un convoyeur au sol équipé d'un chariot de levage mobile en hauteur, pour introduire ou retirer des récipients de stockage (7) portant sur leurs côtés situés vers l'allée, des barres de prise (9), dans une ou plusieurs cases disposées latéralement à l'allée, des moyens de prise pouvant se déplacer en direction du dispositif de stockage ou de transfert, au-dessus de la projection verticale du chariot pour y entrer ou en sortir, étant prévus ainsi que des crochets de traction (2) pouvant pivoter autour d'une articulation verticale (1) et venir en prise avec les barres (9) par combinaison de formes, caractérisé en ce que les articulations verticales (1) des crochets (2) sont montés solidaires du chariot, sur les côtés en face des casiers, tandis que le mouvement de pivotement de deux crochets (2) opposés, en direction du dispositif de stockage ou de transfert, étant assuré par un même entraînement linéaire (15) agissant directement entre eux, près de chacune des articulations (1), chacun des deux crochets (2) face à face peut être bloqué à volonté en position d'engagement au moyen d'un cliquet d'arrêt commandé (12), chaque crochet de tracteur (2) porte à son extrémité de prise un galet tournant autour d'un axe vertical, et en ce que sur le chariot de levage un mécanisme d'entraînement par courroies (10), s'étendant en direction du dispositif de stockage ou de transfert fonctionnant dans les deux sens, avec des galets verticaux, le mécanisme d'entraînement (10)peut être mise en pression latéralement sur le conteneur de stockage (7) pour y adhérer par frottement, tandis qu'il est prévu, du côté opposé et disposé parallèlement, un moyen d'appui (11) réduisant le frottement, servant à recevoir les forces transversales de pression du mécanisme à courroies (10).

2. Moyen de prise de charge selon la revendication 1, caractérisé en ce que la barre de prise (9) s'étend sur la face frontale du conteneur de stockage (7) et présente une section en U ouverte vers le bas.

3. Moyen de prise de charge selon la revendication 1 ou 2, caractérisé en ce que le chariot élévateur comporte un système de levage pour desservir les plans du cadre de rayonnage transportable (4) qu'il emmène avec lui et pour accrocher les galets (8) de roulement dans la barre de prise du conteneur de stockage (7).

4. Moyen de prise de charge selon la revendication 1, caractérisé en ce que le chariot élévateur peut emmener avec lui un cadre de rayonnage transportable (4).

5. Moyen de prise de charge selon la revendication 1, caractérisé en ce que le moyen d'appui (11) est une rangée de galets, une barre en matière plastique permettant le glissement, ou une courroie de frottement.

6. Moyen de prise de charge selon une quelconque des revendications précédentes, caractérisé en ce que les éléments d'entraînement portés par le chariot élévateur sont disposés latéralement par rapport au conteneur à prendre.
